(19) Europäisches Patentamt
European Patent Office
Office européen des brevets

(11) Veröffentlichungsnummer: **0 132 678**
**A1**

# (12) EUROPÄISCHE PATENTANMELDUNG

(21) Anmeldenummer: **84107999.9**

(22) Anmeldetag: **09.07.84**

(51) Int. Cl.⁴: **C 08 F 26/00**
**C 09 D 3/74**

(30) Priorität: **20.07.83 DE 3326186**

(43) Veröffentlichungstag der Anmeldung:
**13.02.85 Patentblatt 85/7**

(84) Benannte Vertragsstaaten:
**BE DE FR GB IT NL**

(71) Anmelder: **BAYER AG**
**Konzernverwaltung RP Patentabteilung**
**D-5090 Leverkusen 1 Bayerwerk(DE)**

(72) Erfinder: **Schröer, Wolf-Dieter, Dr.**
**Christian-Hess-Strasse 65**
**D-5090 Leverkusen 1(DE)**

(72) Erfinder: **Schuster, Klaus, Ing. grad.**
**Gerhard-Hauptmann-Strasse 33**
**D 5090 Leverkusen 3(DE)**

(72) Erfinder: **Bartl, Herbert, Dr.**
**Eichendorffweg 10**
**D 5068 Odenthal(DE)**

(72) Erfinder: **Hassdenteufel, Jürgen, Dr.**
**Wolfskaul 5**
**D-5000 Köln 80(DE)**

## (54) Neue Copolymere des N-Vinylcarbamidsäuremethylesters.

(57) Die Erfindung betrifft neue Copolymere des N-Methylcarbamidsäuremethylesters. Diese können bei höherer Temperatur vernetzt werden.

EP 0 132 678 A1

Croydon Printing Company Ltd

BAYER AKTIENGESELLSCHAFT 5090 Leverkusen, Bayerwerk

Konzernverwaltung RP
Patentabteilung Eck/by-c

## Neue Copolymere des N-Vinylcarbamidsäuremethylesters

Die Erfindung betrifft neue Copolymere des N-Methylcarbamidsäuremethylesters. Diese können bei höherer Temperatur vernetzt werden.

Thermisch vernetzbare Polymerzusammensetzungen wie sie z.B. zur Herstellung von Einbrennlackierungen benötigt werden, können die reaktive Gruppe im Polymer selbst enthalten, oder eine zusätzliche Vernetzerkomponente, z.B. Polyisocyanate mit geschützten Isocyanatgruppen enthalten (z.B. H. Wagner und H.F. Sarx, Lackkunstharze S. 161; Carl Hanser Verlag München 1971). Die zugesetzten Vernetzer müssen mit dem Polymersystem verträglich sein. Das gilt ebenso für die Mischungen von Lackpolymeren mit Melamin- und Harnstoff-Formaldehydharzen.

Als einpolymerisierbare Comonomere, die reaktive Gruppen tragen, können Acrylsäurederivate verwendet werden (Wagner und Sarx, S. 230; s.o.). Jedoch ist deren Copolymerisationsfähigkeit mit anderen Monomeren begrenzt.

Gegenstand der Erfindung sind neue Copolymere des N-Vinylcarbamidsäuremethylesters (Vinylurethan),

$$CH_2{=}CH{-}NH{-}COOCH_3$$

mit Monomeren der Formel (I)

$$CH_2{=}C\begin{matrix}R^1\\ R^2\end{matrix} \qquad (I),$$

in welcher

$R^1$ für Wasserstoff oder Methyl,

$R^2$ für $-COOR^3$, $-CON\begin{matrix}R^4\\ R^5\end{matrix}$, Halogen wie Fluor und Chlor, $-OCOR^3$, $-NR^6COCH_3$, $-NR^6COH$, worin

$R^3$ für Wasserstoff, einen gegebenenfalls substituierten aliphatischen Rest mit 1 bis 18 C-Atomen, aromatischen Rest mit 6 bis 14 C-Atomen, einen araliphatischen Rest mit 7 bis 16 C-Atomen oder einen cycloaliphatischen Rest mit 5 bis 10 C-Atomen,

$R^4$ für Wasserstoff; $CH_3$, $-C_2H_5$,

$R^5$ für $-CH_3$, $-C_2H_5$, $-(CH_2)_n-N\begin{matrix}R^7\\ R^7\end{matrix}$ mit n = 2,3,4,5 oder 6,

$R^7$ für $-CH_3$, $-C_2H_5$ steht,

oder mit Monomeren der Formel (II)

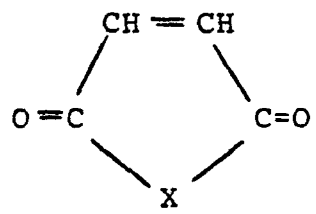

(II),

worin

X für -O-, $N-R^8$, worin

$R^8$ für Wasserstoff oder einen gegebenenfalls substituierten aliphatischen Rest mit 1 bis 18 C-Atomen, aromatischen Rest mit 6 bis 14 C-Atomen steht, einen araliphatischen Rest mit 7 bis 16 C-Atomen oder einen cycloaliphatischen Rest mit 5 bis 10 C-Atomen steht,

oder mit Monomeren der Formel (III)

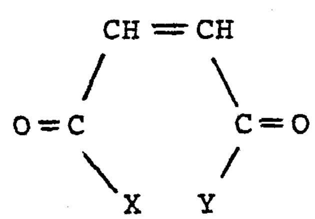

(III),

in welcher

X für -OH, $-OR^9$, $-NR^9R^8$,

Y für $-OR^9$, $-NR^9R^8$ und

$R^9$ für einen gegebenenfalls substituierten aliphatischen Rest mit 1 bis 18 C-Atomen, aromatischen Rest mit 6 bis 14 C-Atomen, einen araliphatischen Rest mit 7 bis 16 C-Atomen oder einen cycloaliphatischen Rest mit 5 bis 10 C-Atomen steht.

Als aliphatische Reste $R^3$, $R^8$ und $R^9$ seien beispielsweise genannt: $CH_3-$, $C_2H_5-$, $C_4H_6-$, $C_5H_{11}-$, $C_6H_{13}-$, $C_7H_{15}-$, $C_8H_{17}-$, $C_9H_{19}-$, $C_{12}H_{25}-$, $C_{14}H_{29}-$, $C_{16}H_{33}-$, $C_{18}H_{37}-$, $-CH_2CH_2SO_3X$ (X = Alkali, Ammonium).

Als aromatische Reste $R^3$, $R^8$ und $R^9$ seien beispielsweise genannt: Phenyl, Naphtyl, Biphenyl, Phenylmethyl, $C_6H_4SO_3X$ (X = Alkali, Ammonium).

Als araliphatische Reste $R^3$, $R^8$ und $R^9$ sei beispielsweise Benzyl genannt.

Als cycloaliphatische Reste $R^3$, $R^8$ und $R^9$ sei beispielsweise Cyclohexyl genannt.

Die erfindungsgemäßen Comonomeren sind bei höherer Temperatur vernetzbar.

Als mögliche Substituenten an den Resten $R^3$, $R^8$, $R^9$ und $R^{10}$ seien beispielsweise Hydroxyl-, $C_1$-$C_4$-Epoxy-, Cyano-, Amino-, Sulfosäuregruppen und Halogen wie Chlor genannt.

Die erfindungsgemäßen Comonomeren des N-Vinylcarbamidsäuremethylesters enthalten 1 bis 90 Gew.-%, vorzugsweise 5 bis 50 Gew.-%, besonders bevorzugt 5 bis 30 Gew.-% eingebautes Vinylurethan.

Comonomere der Formel (I) sind z.B. Acrylsäure und Methacrylsäure, sowie deren Ester mit $C_1$-$C_8$-Alkanolen, sowie mit heterosubstituierten Alkanolen. Als Beispiele seien Acrylsäuremethylester, Methylmethacrylat, Ethyl(meth)-acrylat, Butyl(meth)acrylat, Hexyl(meth)acrylat, Octyl(meth)acrylat, 2-Ethylhexyl(meth)acrylat, 2-Hydroxyethyl(meth)acrylat, 2-Chlorethyl(meth)acrylat, 2-Ethoxyethyl(meth)acrylat, 2-Cyanethyl(meth)acrylat, 2-Chlorethyl(meth)acrylat, 2,3-Epoxypropyl(meth)acrylat, 2-Sulfoethyl(meth)acrylat, 2-Dimethylaminoethyl(meth)acrylat, 2-Diethylaminoethyl(meth)acrylat genannt.

Weitere geeignete Comonomeren der Formel (I) sind z.B. substituierte Amide der Acrylsäure und der Methacrylsäure von $C_1$-$C_{18}$-Alkylaminen, $C_1$-$C_{18}$-Dialkylaminen oder heterosubstituierten Alkyl- oder Dialkylaminen, sowie das Acrylnitril und Methacrylnitril. Beispielhaft seien Methyl(meth)acrylamid, Ethyl(meth)acrylamid, Isopropyl-(meth)acrylamid, tert.-Butyl(meth)acrylamid, Octadecyl(meth)acrylamid, Phenyl(meth)acrylamid, Hydroxymethyl(meth)acrylamid, Methoxymethyl(meth)acrylamid, 2-Dimethylaminoethyl(meth)acrylamid, 2-Diethylaminoethyl(meth)acrylamid, 2-Hydroxyethyl(meth)acrylamid, Dimethyl(meth)acrylamid, Diethyl(meth)acrylamid genannt.

Weitere Comonomere der Formel (I) sind Ester des Vinylalkohols und Amide von gegebenenfalls substituierten

Vinylaminen. Es seien insbesondere Vinylacetat und Vinylpropionat, N-Vinylacetamid, N-Vinylformamid, N-Methyl-N-vinylacetamid, N-Methyl-N-vinylformamid, N-Ethyl-N-vinylacetamid, N-Ethyl-N-vinylformamid genannt.

Im Sinne der Erfindung geeignete Comonomere gemäß Formel (II) umfassen Maleinsäureanhydrid und Maleinimide, die sich von Alkyl oder Arylaminen ableiten, wobei in beiden Fällen der Kohlenwasserstoffrest Heteroatome oder Heteroatomgruppen enthalten kann. Als Beispiele seien N-Methylmaleinimid, N-Ethylmaleinimid, N-Cyclohexylmaleinimid, N-Phenylmaleinimid, N-(2-Sulfoethyl)maleinimid, N-(4-Sulfophenyl)maleinimid und die Salze der Sulfosäuren beispielsweise Alkali- und Ammoniumsalze, Salze von primären, sekundären oder tertiären aliphatischen Aminen wie Methyl-, Dimethyl-, Trimethyl-, Ethyl-, Diethyl-, Triethyl-, Dimethylpropylamin usw. genannt.

Comonomere der Formel (III) sind z.B. Mono- und Diester sowie Mono- und Diamide der Maleinsäure und der Fumarsäure, die Salze der Monoester und Monoamide, die sich von $C_1$-$C_{18}$-Alkanolen sowie von heterosubstituierten Alkanolen oder von $C_1$-$C_{18}$-Mono- und Dialkylaminen sowie von heterosubstituierten Mono- und Diaminen ableiten.

Als Beispiele seien Maleinsäuredimethylester, Maleinsäurediethylester, Maleinsäuredi(n)butylester, Maleinsäuredilaurylester, Maleinsäuremonoethylester, Maleinsäuremonohexylester, Maleinsäuremono-(2-ethyl-hexyl)-ester, Fumarsäuredimethylester, Fumarsäurediisobutylester, Fumarsäure-bis-(2-ethylhexyl)ester, Maleinsäurediamid, Fumarsäurediamid genannt.

Von den genannten Comonomeren werden Acrylsäure, Methylacrylat, Methylmethacrylat, Butylacrylat, Butylmethacrylat, 2-Sulfoethylmethacrylat, 2-Dimethylaminoethylmethacrylat, 2-Dimethylaminoethylmethacrylamid, Methylacrylamid, Methylmethacrylamid, Acrylnitril, Vinylacetat, N-Methyl-N-vinylacetamid, Maleinsäureanhydrid und N-Phenylmaleinimid besonders bevorzugt.

Ganz besonders bevorzugt werden Acrylsäure, Methylmethacrylat, Acrylnitril und Vinylacetat.

Die neuen erfindungsgemäßen Copolymeren können nach üblichen Polymerisationsverfahren hergestellt werden. Die Polymerisation kann z.B. in einem rührbaren Reaktor unter Inertgasatmosphäre (z.B. Stickstoff) in Gegenwart von Initiatoren gegebenenfalls unter erhöhtem Druck bis zu 700 bar bei einer Temperatur von 30 bis 150°C, vorzugsweise 50 - 100°C durchgeführt werden. Die Polymerisation dauert im allgemeinen 1 bis 20 Stunden, wobei Umsätze bis zu 90 Gew.-% erreicht werden.

Als Initiatoren eignen sich Peroxide wie z.B. Benzoylperoxid, tert.-Butylhydroperoxid, Di-tert.-Butylperoxid, Cumolhydroperoxid, Dicumolperoxid, Dichlorbenzoylperoxid,

Succinylperoxid, Cyclohexylperoxydicarbonat sowie Azoinitiatoren wie z.B. N-Azoisobuttersäuredinitril, Azodicyclohexylcarbonitril, Dimethyl-α,α'-Azodiisobutyrat.

Die Polymerisation kann kontinuierlich oder diskontinuierlich ausgeführt werden. Ebenso eignen sich in bestimmten Fällen, z.B. bei Verwendung von wasserlöslichen Azoverbindungen, Emulsions- und Suspensionspolymerisationsverfahren.

Der N-Vinylcarbamidsäuremethylester (Vinylurethan) läßt sich bevorzugt in polaren Lösungsmitteln mit geringen Übertragungskonstanten wie beispielsweise in Alkoholen wie tert. Butanol und Amiden wie Dimethylformamid, in Ketonen wie Aceton, Methylethylketon, Methanol oder deren Gemischen copolymerisieren. Als Initiatoren eignen sich Peroxide sowie N-Azoisobuttersäuredinitril und dessen Derivate. Der eingesetzte Initiator, die Menge Initiator und die Reaktionstemperatur beeinflußt die Grenzviskositätszahlen der erhaltenen Copolymerisate.

Die Grenzviskositätszahlen der erfindungsgemäßen Polymeren betragen 0,1 bis 3,5 dl/g (gemessen in Tetrahydrofuran). Der Umsatz an Vinylurethan liegt bei 30 bis 96 %. Die Copolymerisation kann sehr vorteilhaft als Lösungs- oder Lösungs-Fällungspolymerisation durchgeführt werden. Aus den Lösungen können die Copolymerisate mit unpolaren Lösungsmitteln ausgefällt werden.

Es lassen sich auch Emulsions- oder Suspensionspolymerisationsverfahren anwenden, wenn wasserlösliche Azoverbindungen als Radikalstarter verwendet werden.

Die neuen Copolymeren lassen sich als Lösung zu Filmen gießen, die sich nach dem Auftrocknen durch Tempern bei 100 bis 200°C, vorzugsweise 130 bis 180°C vernetzen lassen. Das Lösungsmittel wird im Hinblick auf den Verwendungszweck des Copolymeren gewählt.

Erfindungsgemäße Emulsionspolymerisate lassen sich z.B. zu Filmen ausziehen, die nach dem Trocknen bei den obengenannten Temperaturen vernetzt werden können.

Die Vernetzung kann auch durch Zusatz von primären oder sekundären Diaminen, z.B. Ethylendiamin, Propylendiaminen, 1,4-Diaminobutan, 1,6-Diaminohexan, 2,5-Diamino-2,5-dimethylhexan, 5-Amino-1-aminomethyl-1,3,3-trimethylcyclohexan, Bis-(4-aminocyclohexyl)methan, Bis-aminomethylhexahydro-4,7-methanoindan, 1,2-Diaminobenzol, 1,3-Diaminobenzol, 1,4-Diaminobenzol und Bis-(4-amino-phenyl)-methan, N,N'-Dimethylaminoethylendiamin, Piperazin oder primären oder sekundären Polyaminen wie Diethylentriamin, Triethylentetramin, Tetraethylenpentamin und höheren Homologen wie Dipropylentriamin, Tripropylentetramin und höheren Homologen oder Bis(hexamethylen)triamin verstärkt werden.

Die erfindungsgemäßen Copolymeren eignen sich insbesondere zur Herstellung von thermisch vernetzbaren Lacküberzügen, Einbrennlacken, zur Beschichtung nach Wirbelsinterverfahren und zur Herstellung von vernetzten Formkörpern nach dem Tauchverfahren.

## Beispiele

### Copolymer I

In einem 500 ml Dreihalskolben mit Thermometer, Begasungsrohr und Rückflußkühler wurden 80 Gew.-Teile Methacrylsäuremethylester und 20 Gew.-Teile N-Vinylcarbamidsäuremethylester in 200 Gew.-Teilen tert.-Butanol gelöst. Der Kolben wurde mit einem kontinuierlichen Stickstoffstrom von ca. 3 ltr./h begast. Nach 10 Min. wurde eine Lösung von 0,5 Gew.-Teilen Azoisobuttersäuredinitril in 10 Gew.-Teilen tert. Butanol zugegeben und der Kolbeninhalt auf 65°C erhitzt. Unter weiterer Stickstoffbegasung wurde diese Temperatur 10 Stunden gehalten.

Nach Ausfällung der viskosen Lösung mit 1500 Gew.-Teilen Petrolether und Trocknung bei 50°C wurden 92 Gew.-Teile Polymerisat mit einer Grenzviskositätszahl von 0,6 dl/g (gemessen in Tetrahydrofuran) erhalten. Die Stickstoffanalyse ergab einen Gehalt von 14,5 Gew.-% N-Vinylcarbamidsäuremethylester.

### Copolymer II

In einem Einschmelzrohr mit einem Volumen von 20 ml werden 0,37 Gew.-Teile N-Vinylcarbamidsäuremethylester in einer Mischung aus 7,5 Gew.-Teilen tert. Butanol und 2,13 Gew.-Teilen Acrylnitril gelöst. Nachdem 5 Min. mit Stickstoff begast wurde, wurden 0,0125 Gew.-Teile N-Azoisobuttersäuredinitril zugesetzt und das Einschmelzrohr verschlossen. Es wurde 10 Stunden bei 65°C polymerisiert. Das Polymerisat fiel während dieser Zeit als weißes Pulver aus. Nach dem Absaugen, Waschen mit Petrolether und Trocknung bei 50°C erhielt man 1,5 Gew.-Teile eines weißen pulverförmigen Polymerisates mit einer Grenzviskositätszahl von 3,1 dl/g (gemessen in DMF). Die Sauerstoffanalyse ergab einen Wert von 6,6 Gew.-%, was einem Anteil von 20,8 Gew.-% N-Vinylcarbamidsäuremethylester entspricht. (DMF = Dimethylformamid)

Copolymer III

In einem 500 ml Dreihalskolben mit Thermometer wurden unter schwacher Stickstoffbegasung (ca. 2 ltr./h) 30 Gew.-Teile N-Vinylcarbamidsäuremethylester und 70 Gew.-Teile Vinylacetat in 150 Gew.-Teile tert.-Butanol bei 30°C gelöst. Zu der Lösung fügte man 0,5 Gew.-Teile N-Azoisobuttersäuredinitril und erhitzte unter weiterer Stickstoffbegasung 10 Stunden auf 65°C.

Es entstand eine hochviskose klare Lösung. Die Lösung wurde mit 500 ml Petrolether gefällt und das ausgefallene Polymerisat mit ca. 500 ml Petrolether gewaschen und bei 60°C getrocknet. Man erhielt 82 Gew.-Teile eines weißen körnigen Copolymerisates (= 82 Gew.-% Gesamtumsatz). Das Produkt ließ sich bei 170°C und 200 bar zu klaren Platten verpressen. Nach der Stickstoffanalyse betrug der Gehalt an Vinylurethan im Polymerisat 31,7 Gew.-%. Die Grenzviskositätszahl, gemessen in Tetrahydrofuran, betrug 1,2 dl/g.

Copolymer IV

Gemäß Beispiel III wurden 50 Gew.-Teile N-Vinylcarbamidsäuremethylester und 50 Gew.-Teile Vinylacetat in 150 Gew.-Teilen tert. Butanol umgesetzt. Nach der Ausfällung erhielt man 90 Gew.-Teile Polymerisat mit einer Grenzviskositätszahl von 1,05 dl/g (gemessen in Dimethylformamid). Nach der Stickstoffanalyse betrug der N-Vinylcarbamidsäuremethylesteranteil 44,5 Gew.-%.

Copolymer V

Gemäß Beispiel III wurden 5 Gew.-Teile N-Vinylcarbamidsäuremethylester und 95 Gew.-Teile Vinylacetat in 150 Gew.-Teilen tert.-Butanol umgesetzt. Nach der Ausfällung erhielt man 88 Gew.-Teile Polymerisat mit einer Grenzviskositätszahl von 1,05 dl/g (in Dimethylformamid). Nach der Stickstoffanalyse betrug der N-Vinylcarbamidsäuremethylesteranteil 6,3 Gew.-%.

Copolymer VI

Gemäß der Verfahrensweise von Beispiel III wurden 20 Gew.-Teile N-Vinylcarbamidsäuremethylester und 20 Gew.-Teile Acrylsäure in 300 Gew.-Teilen tert.-Butanol unter Zusatz von 0,5 Gew.-Teilen Cyclohexylperoxydicarbonat 8 h bei 35°C polymerisiert.

Nach Fällung mit 1000 Gew.-Teilen Petrolether erhielt man 38 Gew.-Teile Polymerisat mit einer Grenzviskositätszahl von 0,556 dl/g (in DMF). Der aus der Stickstoffanalyse ermittelte Gehalt an N-Vinylcarbamidsäuremethylester betrug 37,6 Gew.-%.

10 Gew.-Teile Copolymerisat und 0,5 Gew.-Teile Amin wurden in 89,5 Gew.-Teilen Lösungsmittel gelöst. Von der Lösung wurde mit einem Rakel (Strichstärke 1 mm) ein Film auf einer Glasplatte ausgezogen und 24 Stunden bei Raumtemperatur aufgetrocknet. Der Film wurde a Min. bei b °C getempert. 0,5 Gew.-Teile des Polymerfilms wurden mit 9,5 Gew.-Teilen des Lösungsmittels 15 Min. bei 60°C gerührt und dann beurteilt. Die Ergebnisse sind in Tab. 1 zusammengefaßt.

Tabelle 1

| Copolymer | Lösungsmittel | Aminzusatz | Temperung a (min) | Temperung b (°C) | Beurteilung des Films |
|---|---|---|---|---|---|
| I | Tetrahydrofuran | - | 30 | 140 | unlöslich |
| Polymethylmeth-acrylat | Chloroform | - | 30 | 140 | löslich |
| II | DMF* | - | 30 | 80 | löslich |
| II | DMF | - | 30 | 100 | teilweise löslich |
| II | DMF | - | 30 | 140 | unlöslich |
| Polyacrylnitril | DMF | - | 30 | 140 | löslich |
| IV | DMF | - | 30 | 100 | löslich |
| IV | DMF | - | 30 | 140 | unlöslich |
| Polyvinylacetat | DMF | - | 30 | 140 | löslich |
| IV | DMF | Hexamethylen-diamin | 30 | 140 | unlöslich |
| Polyvinylacetat | DMF | Hexamethylen-diamin | 30 | 140 | löslich |
| V | DMF | - | 30 | 140 | unlöslich |

* Dimethylformamid

Patentansprüche

1. Copolymere des N-Vinylcarbamidsäuremethylesters (Vinylurethan)

$$CH_2=CH-NH-COOCH_3$$

mit Monomeren der Formel (I)

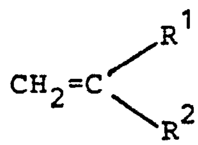 (I),

in welcher

$R^1$ für Wasserstoff oder Methyl,

$R^2$ für $-COOR^3$, 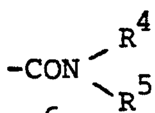, Halogen, $-OCOR^3$, $-NR^6COCH_3$, $-NR^6COH$, worin

$R^3$ für Wasserstoff, einen gegebenenfalls substituierten aliphatischen Rest mit 1 bis 18 C-Atomen, aromatischen Rest mit 6 bis 14 C-Atomen, einen araliphatischen Rest mit 7 bis 16 C-Atomen oder für einen cycloaliphatischen Rest mit 5 bis 10 C-Atomen,

$R^4$ für Wasserstoff, $-CH_3$, $-C_2H_5$,

$R^5$ für $-CH_3$, $-C_2H_5$, $-(CH_2)_n-$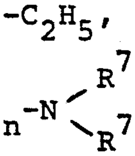 mit n = 2, 3, 4, 5 oder 6,

$R^6$ für Wasserstoff, $-CH_3$, $-C_2H_5$ und

$R^7$ für $-CH_3$, $-C_2H_5$ steht,

oder mit Monomeren der Formel (II)

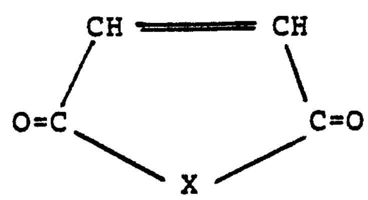

(II),

worin

X für -O-, $N-R^8$, worin

$R^8$ für Wasserstoff oder einen gegebenenfalls substituierten aliphatischen Rest mit 1 bis 18 C-Atomen oder aromatischen Rest mit 6 bis 14 C-Atomen, einen cycloaliphatischen Rest mit 5 bis 10 C-Atomen oder einen araliphatischen Rest mit 7 bis 16 C-Atomen steht,

oder mit Monomeren der Formel (III)

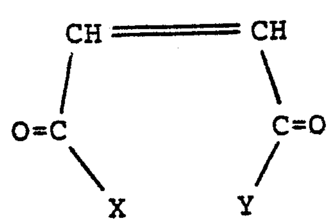

(III),

in welcher

X für -OH, $-OR^9$, $-NR^9R^8$,

Y für $-OR^9$, $-NR^9R^8$ und

$R^9$ und $R^{10}$ für einen gegebenenfalls substituierten aliphatischen Rest mit 1 bis 18 C-Atomen, einen aromatischen Rest mit 6 bis 14 C-Atomen, einen araliphatischen Rest mit 7 bis 16 C-Atomen oder einen cycloaliphatischen Rest mit 5 bis 10 C-Atomen steht.

2. Verwendung der Copolymeren gemäß Anspruch 1 zur Herstellung von Einbrennlackierungen, vernetzten Formkörpern und zur Beschichtung.

0132678

Nummer der Anmeldung

Europäisches Patentamt

# EUROPÄISCHER RECHERCHENBERICHT

EP 84 10 7999

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | FR-A-2 179 990 (BASF)<br>* Ansprüche 1,3 *<br>--- | 1,2 | C 08 F 26/00<br>C 09 D 3/74 |
| X | US-A-3 645 977 (L.G. WOLGEMUTH u.a.)<br>* Ansprüche 1,6 *<br>--- | 1,2 | |
| X | US-A-2 592 254 (J.B. DICKEY)<br>* Ansprüche 1,3 *<br>----- | 1,2 | |
| | | | **RECHERCHIERTE SACHGEBIETE (Int. Cl. 3)** |
| | | | C 08 F |

Der vorliegende Recherchenbericht wurde für alle Patentansprüche erstellt.

| Recherchenort | Abschlußdatum der Recherche | Prüfer |
|---|---|---|
| DEN HAAG | 06-09-1984 | CAUWENBERG C.L.M. |

KATEGORIE DER GENANNTEN DOKUMENTEN
- X : von besonderer Bedeutung allein betrachtet
- Y : von besonderer Bedeutung in Verbindung mit einer anderen Veröffentlichung derselben Kategorie
- A : technologischer Hintergrund
- O : nichtschriftliche Offenbarung
- P : Zwischenliteratur
- T : der Erfindung zugrunde liegende Theorien oder Grundsätze
- E : älteres Patentdokument, das jedoch erst am oder nach dem Anmeldedatum veröffentlicht worden ist
- D : in der Anmeldung angeführtes Dokument
- L : aus andern Gründen angeführtes Dokument
- & : Mitglied der gleichen Patentfamilie, übereinstimmendes Dokument